# EUROPÄISCHE PATENTSCHRIFT

(11) **EP 0 897 337 B1**
(45) Veröffentlichungstag und Bekanntmachung des Hinweises auf die Patenterteilung: **28.06.2000**
(21) Anmeldenummer: 97924871.3
(22) Anmeldetag: 02.05.1997
(51) Int. Cl.: B60D 5/00, B61D 17/22

(54) **MITTELRAHMEN EINES IN ZWEI HÄLFTEN UNTERTEILTEN BALGES EINES ÜBERGANGS**
CENTER FRAME OF A TWO-PART BELLOWS OF A CONNECTING ELEMENT
CADRE CENTRAL D'UN SOUFFLET, DIVISE EN DEUX MOITIES, D'UN ELEMENT DE RACCORDEMENT

(30) Priorität: 03.05.1996 DE 19617903; 31.05.1996 DE 19621913
(43) Veröffentlichungstag der Anmeldung: 24.02.1999
(73) Patentinhaber: HÜBNER Gummi- und Kunststoff GmbH, D-34123 Kassel (DE)
(72) Erfinder: KOCH, Robert, D-37242 Bad Sodden-Allendorf (DE)
(74) Vertreter: WALTHER, WALTHER & HINZ Patentanwälte
(86) Internationale Anmeldenummer: DE9700897
(87) Internationale Veröffentlichungsnummer: WO9742045

(56) Entgegenhaltungen:
- EP-A- 0 614 797
- DE-B- 1 207 220

## Beschreibung

Die Erfindung betrifft einen Mittelrahmen eines in zwei Hälften unterteilten Balges eines Übergangs zwischen zwei gelenkig miteinander verbundenen Fahrzeugteilen, wobei die Balghälften endseitig an einem Fahrzeugteil anbringbar sind.

Ein Übergang zwischen zwei gelenkig miteinander verbundenen Fahrzeugteilen eines Fahrzeugs ist bekannt; hierbei besteht der Übergang üblicherweise aus einer Übergangsbrücke, die von einem Falten- oder Wellenbalg überspannt wird. Die beiden Fahrzeugteile sind darüber hinaus durch ein Gelenk miteinander verbunden, wobei sich Teile des Übergangs auf diesem Gelenk abstützen.

Aus der DE-B 1207220 ist ein Mittelrahmen eines Faltenbalges zwischen zwei gelenkig miteinander verbundenen Fahrzeugteilen gemäß den Merkmalen des Oberbegriffs bekannt, insbesondere mit endseitig an die Fahrzeugteile angelenkte Balgenden.
Es ist bekannt, Versorgungsleitungen, wie zum Beispiel Kabelschläuche, Leitungen für die Heizung und die Druckluftversorgung, Elektroleitungen und, wenn nötig, Klimaleitungen, durch den Boden eines derartigen Gelenkfahrzeugs zu führen. Durch die Entwicklung der Niederflurbusse mit einer Flurhöhe von lediglich 400 mm ist für die Führung derartiger Versorgungsleitungen im Bodenbereich jedoch kein ausreichender Raum mehr vorhanden. Es ist daher auch bekannt, derartige Versorgungleitungen auf einer Seite des Überganges zu führen. Es hat sich jedoch herausgestellt, daß bei Gelenkeinschlägen von mehr als 50 Grad diese Versorgungsleitungen nicht präzise geführt werden können, so daß es zu Störungen in Folge von Bruch und Quetschungen kommt, die häufig aufwendige Reparaturen zur Folge haben. Gegenstand der Erfindung ist nun ein Mittelrahmen zur Führung von Versorgungsleitungen der eingangs genannten Art, mit dem die bekannten Nachteile vermieden werden.

Ein derartiger Mittelrahmen zeichnet sich nach einer ersten Ausführungsform erfindungsgemäß dadurch aus, daß der Mittelrahmen im Deckenbereich des Übergangs einen Schlitten zur Führung von Versorgungsleitungen, zum Beispiel Schläuche, Kabel u.ä. aufweist, wobei der Schlitten quer zur Längsachse des Fahrzeugs im Mittelrahmen beweglich gelagert ist. Es hat sich herausgestellt, beispielsweise bei Niederflurbussen, daß die absolute Bauhöhe der Busse beibehalten wird, jedoch die Flurhöhe nach unten abgesenkt wird. Dies bedeutet, daß die freie Durchgangshöhe in einem derartigen Niederflurbus mehr als das normal notwendige Maß beträgt. Infolgedessen steht im Dachbereich genügend Raum zur Führung der Versorgungsleitungen zwischen den beiden Fahrzeugteilen eines Gelenkfahrzeuges zur Verfügung. Hierdurch wird die Führung der Versorgungsleitungen auch bei Durchfahren enger Kurven ermöglicht, ohne daß die Gefahr der Beschädigung der Leitungen besteht.

Vorteilhaft zeigt der Schlitten einen Träger mit mehreren Bohrungen zur Durchführung der Versorgungsleitungen; der Träger ist hierbei um eine vertikale Achse verdrehbar von dem Schlitten aufnehmbar. Der Vorteil eines solchen drehbaren Trägers besteht darin, daß bei sehr unflexiblen Versorgungsleitungen die Belastung des Schlittens bei entsprechenden Bewegungen des Schlittens im Mittelrahmen vermindert wird, da die Belastung durch Drehung des Trägers abgebaut wird.

Im einzelnen ist vorgesehen, daß die vertikal verlaufenden Streben des Mittelrahmens durch eine Führungsschiene für den Schlitten verbunden sind. Daraus wird deutlich, daß der Dachbereich im Bereich des Überganges eines derartigen Fahrzeugs abgehängt wird, wodurch eine zusätzliche Schall- und Klimaisolierung im Dach des Faltenbalges ermöglicht wird. Darüberhinaus werden durch die Leitungsführung im Dachbereich wesentliche Kosten eingespart, da es üblich ist, die Mehrzahl aller Versorgungsleitungen bis auf den Übergang durch das Dach zu führen und so die nach dem Stand der Technik bekannte umständliche Verlegung der Versorgungsleitungen an den Holmen eines Fahrzeugsteils nach unten auf der anderen Seite des benachbarten Fahrzeugteils dann wieder nach oben unterbleiben kann.

Nach einem besonderen Merkmal der Erfindung ist der Schlitten in der Führungsschiene zwangsgeführt. Dadurch ist gewährleistet, daß die Versorgungsleitungen unabhängig von den Bewegungen der beiden Fahrzeugteile relativ zu einander immer eine optimale Lage einnehmen, die gewährleistet, daß die Versorgungsleitungen keinerlei Beschädigung erfahren. Im einzelnen ist zur Zwangsführung des Schlittens vorgesehen, daß der Schlitten durch mindestens ein Führungsglied an mindestens einem Fahrzeugteil anlenkbar ist. Vorzugsweise ist jedoch der Schlitten mit jedem Fahrzeugteil durch ein Führungsglied verbunden, wobei das Führungsglied vorteilhaft als Stange ausgebildet ist, die sowohl am Fahrzeugteil als auch am Schlitten gelenkig angeordnet ist. Der Schlitten ist hierbei außermittig zur Fahrzeugmittellängsachse in der Führungsschiene geführt; das als Stange ausgebildete Führungsglied ist in der Mittellängsachse des Fahrzeugs am Fahrzeug befestigt. Hierdurch wird erreicht, daß nicht nur der Schlitten als solcher für die Aufnahme der Kabel geführt ist, sondern es tritt ein zweiter wesentlicher Vorteil zutage, der darin besteht, daß hierdurch auch der Mittelrahmen selbst stabilisiert wird.

Eine besonders ausgeprägte Stabilisierung des Mittelrahmens findet dann statt, wenn die Führungsschiene zwei Schlitten aufweist, die jeweils außerhalb der Mittelachse des Fahrzeugs in der Führungsschiene angeordnet sind, und wenn jeder Schlitten durch jeweils zwei Führungsglieder mit den beiden Fahrzeugteilen verbindbar ist. Eine derartige Konstruktion ist insbesondere dann von Vorteil, wenn im Bereich des Mittelrahmens im Übergang Haltestangen angeordnet werden sollen, und wenn der Mittelrahmen durch keine weiteren Abstützungen in seiner Lage stabilisiert ist. Bei einer derartigen freien Aufhängung des Mittelrahmens bestand nach dem Stand der Technik die Möglichkeit, daß durch Vandalismus oder unachtsame Fahrgäste der Mittelrahmen aus seiner Position gebracht wird, und dieser durch Handkraft zum Schwingen gebracht wird, was auf Dauer eine Zerstörung des Faltenbalges zur Folge hat. Durch die Anordnung von zwei Schlitten in der Führungsschiene jedoch, wobei jeder der Schlitten durch ein Führungsglied mit jedem Fahrzeugteil verbunden ist, wird erreicht, daß auf jede weitere Stabilisierung des Mittelrahmens auch bei Anordnung von Haltestangen am Mittelrahmen verzichtet werden kann.

Um eine gute Führung des bzw. der Schlitten in der Führungsschiene zu gewährleisten, ist vorgesehen, daß die Führungsschiene den Schlitten formschlüssig aber längs der Führungsschiene verschieblich aufnimmt.

In einer bevorzugten Ausführungsform zeigt das Führungsglied ein Gelenk. Es hat sich herausgestellt, daß bei extremen Kurvenfahrten der Weg des Schlittens im Mittelrahmen bzw. in der Führungsschiene nicht ausreichend ist, um ohne Beschädigung der Führungsglieder derartige enge Kurven durchfahren zu können. Durch die Anordnung eines Gelenkes in dem Führungsglied besteht nunmehr in diesem Fall die Möglichkeit des Einknickens des Führungsgliedes in Richtung auf die Führungsschiene zu. Um zu verhindern, daß das Führungsglied nach außen um einen überstreckten Winkel von über 180° einknickt, weist das Gelenk einen entsprechenden Anschlag auf. Weiterhin ist vorgesehen, daß im Bereich des Gelenkes ein Rückholglied angeordnet ist, das am Mittelrahmen und hier insbesondere an der Führungsschiene angeordnet ist. Dieses Rückholglied, das vorzugsweise in der Mittellängsachse des Fahrzeug an der Führungsschiene befestigbar ist, sorgt dafür, daß vor dem Einknickvorgang das Gelenk aus der Totpunktlage, also einem Winkel von 180° oder mehr in die Einknickposition gezogen wird, also einen Winkel von kleiner als 180°. Zur genaueren Justierung des Gelenkes ist vorgesehen, daß das Rückholglied in seiner Länge einstellbar ist. D. h. daß durch die Einstellbarkeit der Länge des Rückholgliedes, das drehbar am Mittelrahmen bzw. an der Führungsschiene befestigt ist, der Zeitpunkt des Einrückvorganges bestimmt werden kann.

Eine zweite Ausführungsform zeichnet sich erfindungsgemäß dadurch aus, daß der Mittelrahmen einen horizontal verlaufenden Bügel aufweist, der einen Schwenkarm horizontal verschwenkbar aufnimmt, wobei der Schwenkarm endseitig Halterungen zeigt. Auch mit dieser Einrichtung kann eine Führung der Versorgungsleistungen auch bei Durchfahren enger Kurven erreicht werden.

Nach einem bevorzugten Merkmal dieser Ausführungsform sind die Halterungen drehbar durch den Schwenkarm aufnehmbar. Bei Kurvenfahrt wird die Einrichtung ähnlich einem Parallelogrammlenker bewegt. Die Bewegung der Einrichtung erfolgt im wesentlichen durch die Bewegung der Versorgungsleitungen selbst, die durch die Knickbewegung der beiden Fahrzeugteile bei Kurvenfahrt hervorgerufen wird.

Im einzelnen ist vorgesehen, daß der Schwenkarm in der Mittellängsachse des Fahrzeugs am Mittelrahmen anbringbar ist. Hieraus wird deutlich, daß durch die Anbringung in der neutralen Achse des Fahrzeugs, sowohl bei Rechts- als auch bei Linkskurven die Versorgungsleitungen optimal geführt werden. Zur Aufnahme der Versorgungsleitungen weisen die Halterungen entsprechende Öffnungen auf.

Anhand der Zeichnung wird die Erfindung nachstehend beispielhaft näher erläutert.
- Fig. 1: zeigt schematisch eine erste Einrichtung zur Führung der Versorgungsleitungen in perspektivischer Darstellung;
- Fig. 2: zeigt einen Schnitt durch die Führungsschiene mit Schlitten;
- Fig. 3: zeigt eine zweite Ausführungsform gemäß Fig. 1;
- Fig. 4: zeigt die Führungsschiene mit den Führungsgliedern in perspektivischer Darstellung;
- Fig. 5: zeigt einen Schnitt gemäß der Linie VI - VI aus Fig. 4.
- Fig. 6: zeigt die Stellung der Führungsschiene und der Führungsglieder bei Kurvenfahrt;
- Fig. 7: zeigt eine zweite Einrichtung zur Führung von Versorgungsleitungen.
- Fig. 8: zeigt die Einrichtung gemäß Fig. 7 in vergrößerter Darstellung.

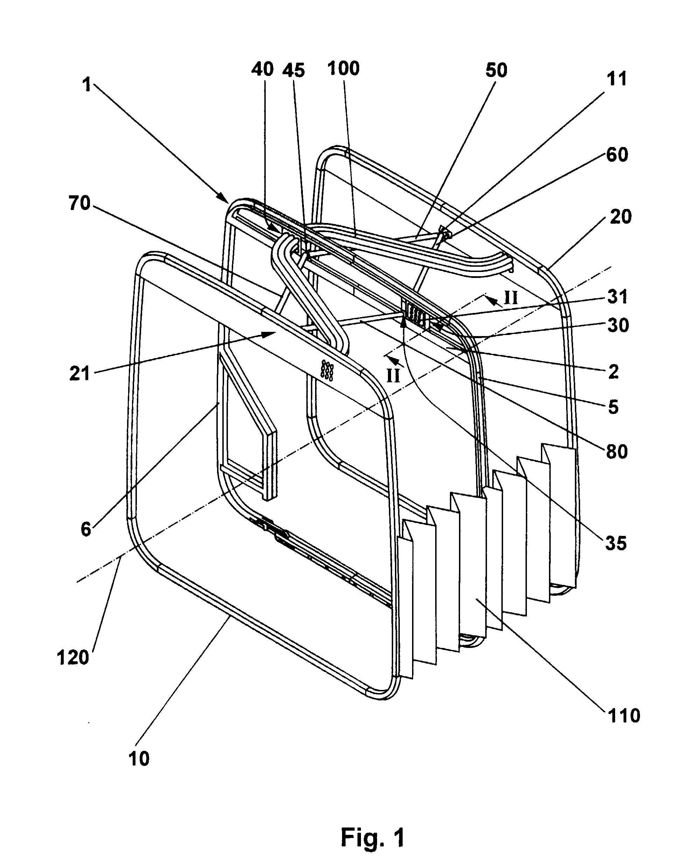

Gemäß Figur 1 ist der Mittelrahmen insgesamt mit 1 bezeichnet. Der Mittelrahmen 1 ist Bestandteil eines nicht dargestellten Falten- oder Wellenbalges, der die Rahmen 10 und 20 verbindet. Die Rahmen 10 und 20 sind jeweils an den entsprechenden Fahrzeugteilen des Gelenkfahrzeuges angeordnet. Die Fahrzeugteile des Gelenkfahrzeuges sind ebenfalls nicht dargestellt. Die eigentliche Einrichtung zur Führung von Versorgungsleitungen befindet sich im Mittelrahmen 1. Hierzu weist der Mittelrahmen 1 im Dachbereich eine mit 2 bezeichnete Führungsschiene auf. Diese Führungsschiene verbindet die beiden vertikalen Streben 5 und 6 des Mittelrahmens 1. Die Führungsschiene 2 nimmt zwei Schlitten 30, 40 parallel zur Längsachse der Führungsschiene verschieblich auf. Diese beiden Schlitten 30, 40 sind jeweils mit als Führungsgliedern ausgebildeten Stangen 50, 60 bzw. 70, 80 mit den Rahmen 10, 20 und somit mit den entsprechenden Fahrzeugteilen verbunden. Die Verbindung erfolgt hierbei jeweils durch Drehgelenke, wobei das Drehgelenk am Rahmen 10, 20 mit 11, 21 und das Drehgelenk am Schlitten mit 35, 45 bezeichnet ist. Die Drehung erfolgt um jeweils eine vertikale Achse. Wesentlich hierbei ist, daß die Schlitten 30, 40 außerhalb der Mittellängsachse des Fahrzeugs in dem Mittelrahmen angeordnet sind, jedoch die Stangen 50 - 80 in der Mittellängsachse des Fahrzeugs angelenkt sind. Die Anlenkung der Stangen an den Rahmen 10, 20 und an den Schlitten 30, 40 erfolgt hierbei gelenkig, so daß die Schlitten 30, 40 schlußendlich entlang der Führungsschiene 2 verschoben werden können, wenn die zwischen den beiden Fahrzeugteilen aufgetretenen Fahrbewegungen dies erfordern. Hervorzuheben hierbei ist, daß durch die Anordnung der Stangen, die nicht verlängerbar sind und die Anordnung der Schlitten in der Führungsschiene, die Schlitten niemals in den Bereich der Mittellängsachse des Fahrzeugs gelangen können. Die Schlitten verbleiben immer außermittig der Mittellängsachse des Fahrzeugs. Gleiches gilt sinngemäß für die Anordnung eines Schlittens in der Führungsschiene.

Die Schlitten selbst besitzen Öffnungen 31, 41 zur Aufnahme von Versorgungleitungen 100.

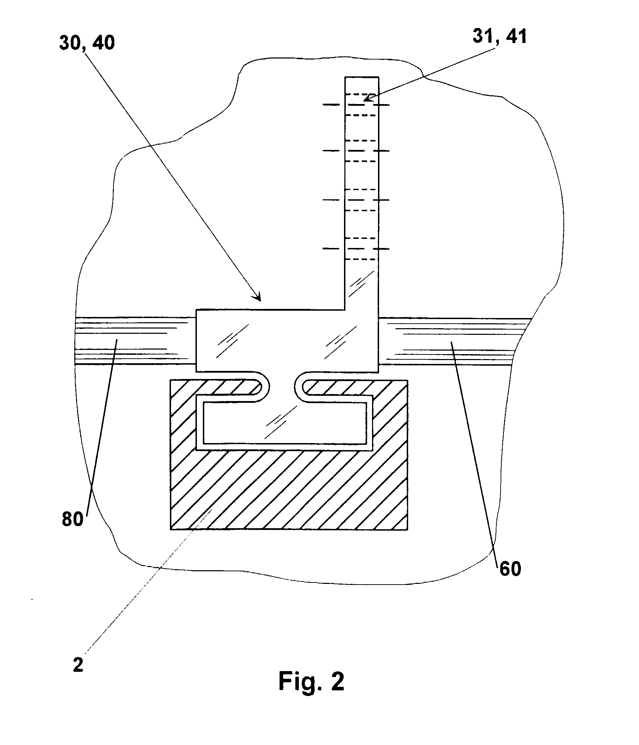

Aus Figur 2 ergibt sich die Ausbildung der Führungsschiene zur Aufnahme der Schlitten. So ist aus Figur 2 erkennbar, daß der Schlitten 30, 40 durch eine Art Schwalbenschwanzführung in der Führungsschiene 2 verschieblich gelagert ist.

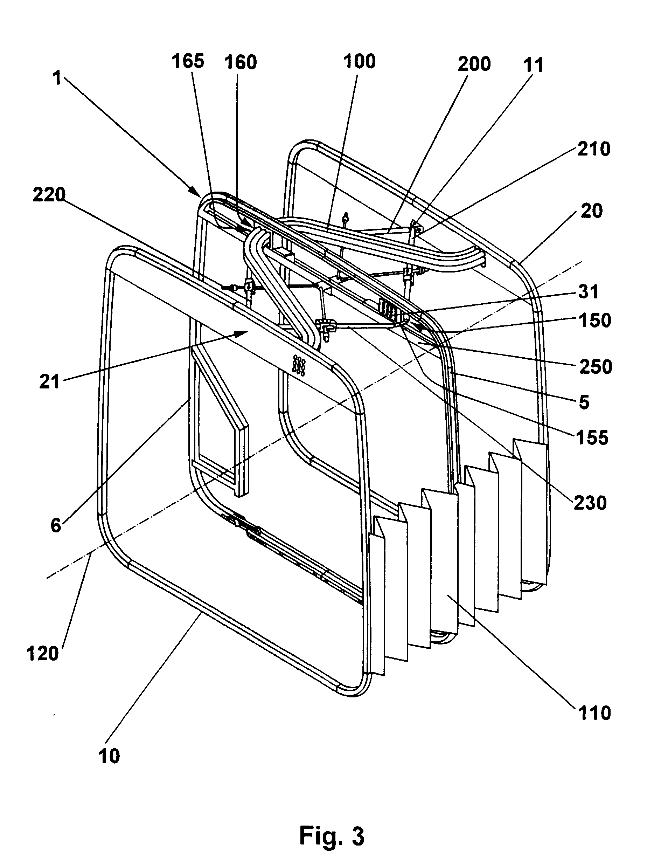

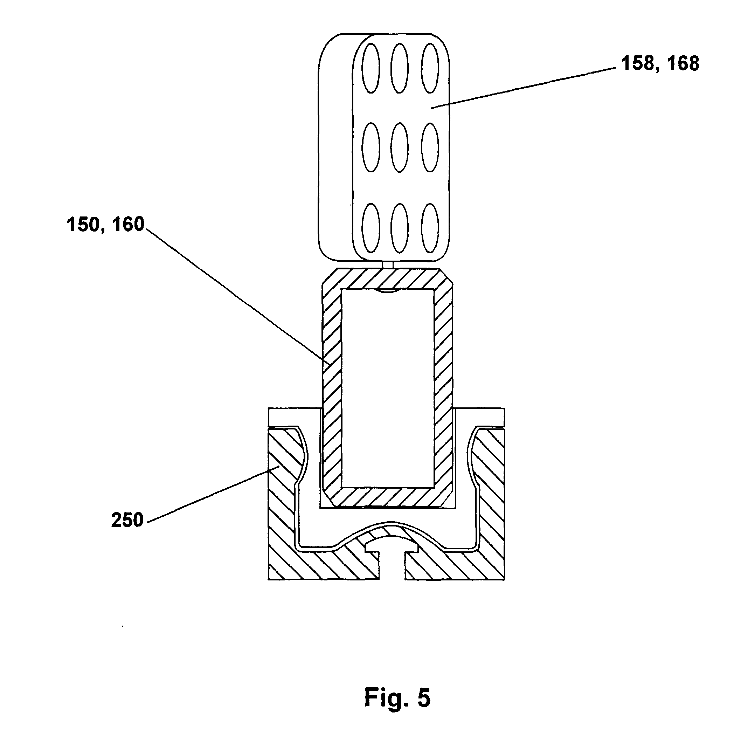

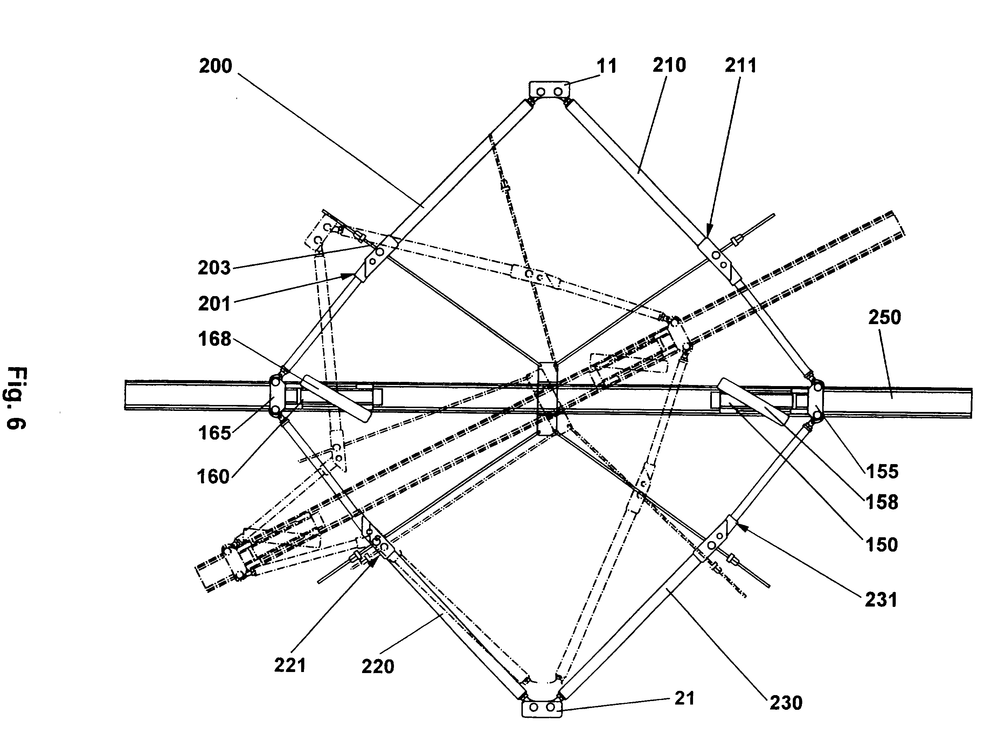

Die zweite Ausführungsform einer Mittelrahmenstabilisierung ergibt sich aus den Figuren 3 bis 6. Hierbei sind gemäß Figur 3 in der mit 250 bezeichneten Führungsschiene die Schlitten 150 und 160 verschieblich geführt, wobei diese Schlitten 150, 160 ähnlich der Ausführungsform gemäß den Figuren 1 und 2 gelenkig angelenkte Führungsglieder 200 bis 230 aufweisen. Diese Führungsglieder 200, 210, 220, 230 sind nicht nur gelenkig an den Schlitten 150, 160 bei 155, 165 angelenkt, sondern ebenfalls gelenkig an dem jeweiligen Fahrzeugteil 10, 20 bei 11, 21. Insoweit ist die konstruktive Ausgestaltung identisch mit der Ausführungsform gemäß den Fig. 1 und 2. Ein Unterschied besteht allerdings darin, daß jedes dieser Führungsglieder 200 bis 230 ein Gelenk 201, 211, 221, 231 zeigt. Ein jedes dieser Gelenke besitzt einen Anschlag 202, 212, 222, 232; der Anschlag ist hierbei derart gestaltet, daß das Gelenk im Bereich der Teilung in die beiden Gelenkkörper 201 a, 201 b bzw. 211a, 211b bzw. 221a, 221b bzw. 231a, 231b eine Schräge 205 bis 235 aufweist, wobei die Gelenkkörper im gestreckten Zustand des Gelenkes, d. h. in dem Zustand, in dem die beiden Teile des Führungsgliedes in einem Winkel von etwa 180° zueinander stehen, aneinander anliegen. Um zu gewährleisten, daß bei entsprechender Kurvenfahrt ein Einknicken der Führungsglieder 200, 210, 220, 230 erfolgt, sind Rückholglieder 203, 213, 223, 233 vorgesehen. Die Wirkungsweise dieser Rückholglieder wird besonders deutlich aus Fig. 5, in der in gestrichelter Darstellung die Führungsschiene 250 und entsprechend die Führungsglieder bei Kurvenfahrt dargestellt sind. Die Darstellung gemäß den durch durchgezogenen Linien zeigt die Ausgangsstellung. Insbesondere wird aus dieser Darstellung gemäß Fig. 5 deutlich, daß die Rückholglieder 203, 213, 223, 233 dazu dienen, dies jeweilige Führungsglied aus der Totpunktlage in die Einknicklage zu überführen. Hierzu ist jedes dieser Rückholglieder ebenfalls gelenkig an der Führungsschiene 250 gelagert. Vorteilhaft ist ein jedes Rückholglied in der Länge verstellbar; dies wird im vorliegenden Fall dadurch bewerkstelligt, daß das jeweilige Rückholglied endseitig ein Gewinde aufweist, wobei das Gewinde eine Schraube aufnimmt, und wobei somit durch die Schraube der Weg vorbestimmbar ist, bei dem das Rückholglied an das Gelenk anstößt und dieses zum Einknicken bewegt.

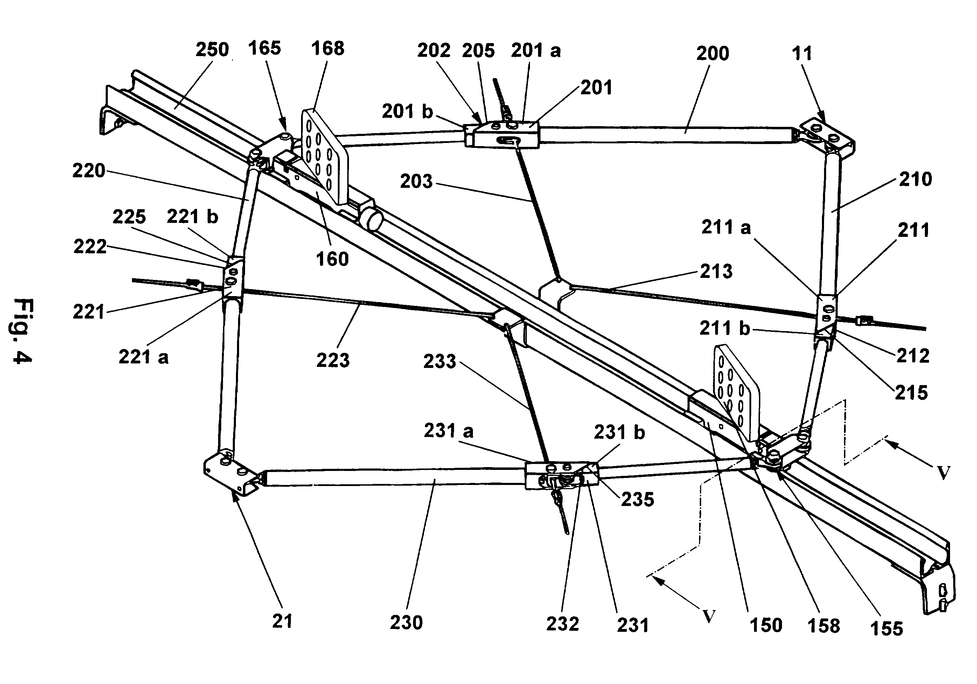

Bei der Darstellung gemäß Fig. 5 handelt es sich um einen Schnitt gemäß der Linie VI - VI aus Fig. 4. Hieraus wird deutlich, ebenso wie aus Fig. 2 der ersten Ausführungsform, daß der Schlitten 150, 160 durch eine Art Schwalbenschwanzführung in der Führungsschiene 250 verschieblich gelagert ist. Darüber hinaus sind aus Fig. 5, ähnlich wie aus Fig. 4, Träger 158, 168 erkennbar, die um eine vertikale Achse verdrehbar vor dem Schlitten 150, 160 aufnehmbar sind, und die der Durchführung der Versorgungsleitungen 100 dienen. Hierzu zeigen die Träger 158, 168 entsprechende Öffnungen.

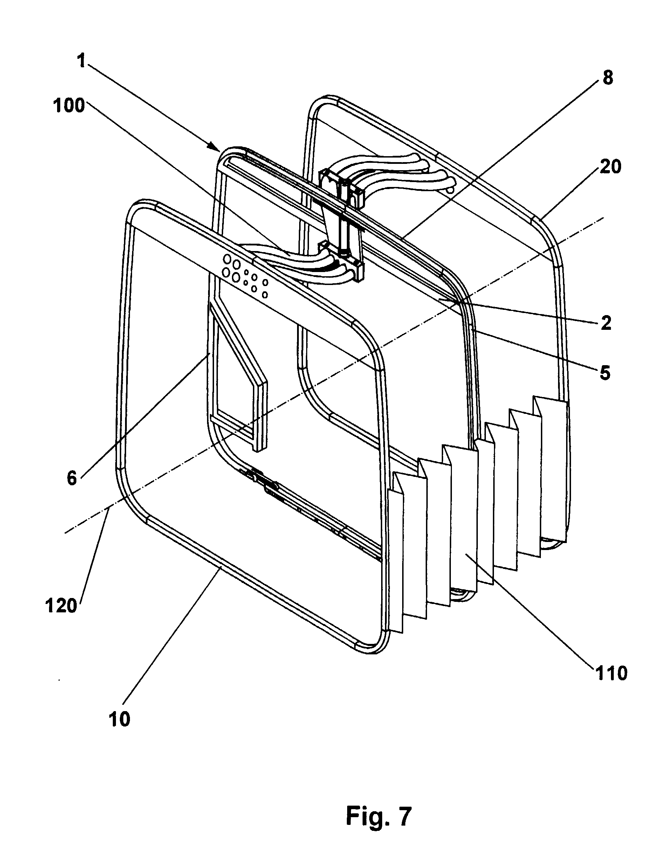

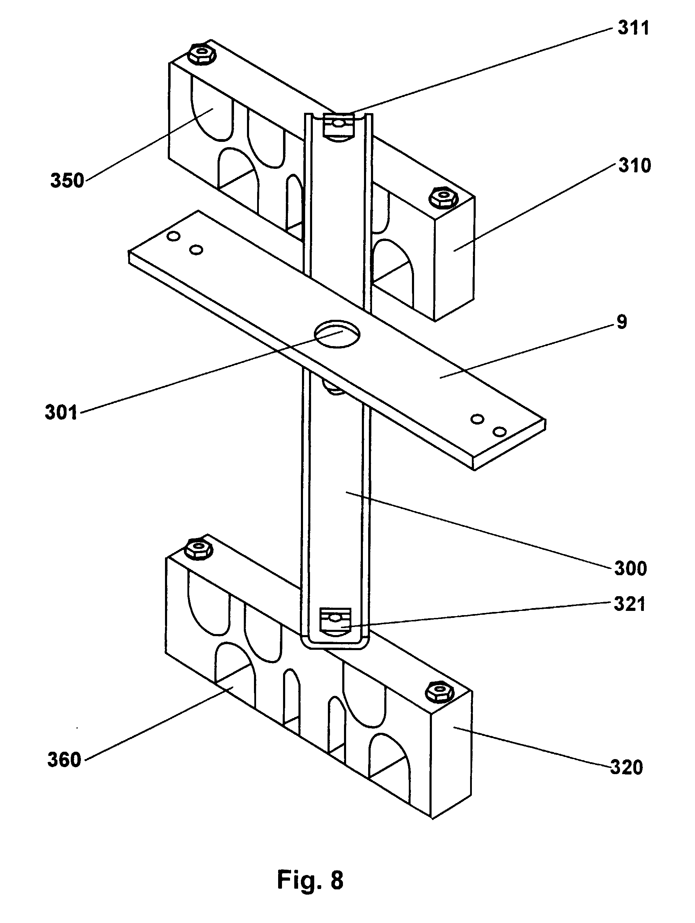

Bei der Einrichtung gemäß den Figuren 7 und 8 ist an dem Bügel 8 des Mittelrahmens 1 in der Mitte des Bügels der Schwenkarm 300 drehbar angelenkt. Endseitig besitzt der Schwenkarm 300 Halterungen 310, 310 mit entsprechenden Öffnungen 350, 360 zur Aufnahme der Versorgungsleitungen 100. Der Schwenkarm ist hierbei mittels einer vertikalen Achse 301 am Bügel 8 befestigt, so daß der Schwenkarm horizontal verschwenkbar ausgebildet ist. Gleichfalls über vertikale Achsen 311, 321 sind die Halterungen 310, 320 horizontal verschwenkbar an dem Schwenkarm angelenkt. Die Fixierung des Schwenkarms 300 am Bügel 8 erfolgt im übrigen durch eine Tragplatte 9.

Bei entsprechender Bewegung der Fahrzeugrahmen 10, 20 relativ zum Mittelrahmen 1 wird der Schwenkarm mit den Halterungen durch die Versorgungsleitungen, die mittig durch die Fahrzeugrahmen 10, 20 aufnehmbar sind, ähnlich einem Parallelogrammlenker bewegt.

## Patentansprüche

1. Mittelrahmen (1) eines in zwei Hälften unterteilten Balges eines Übergangs zwischen zwei gelenkig miteinander verbundenen Fahrzeugteilen, wobei die Balghälften endseitig an einem Fahrzeugteil (10, 20) angelenkt sind,
**dadurch gekennzeichnet**,
daß der Mittelrahmen (1) im Deckenbereich des Übergangs einen Schlitten (30, 40; 150, 160) zur Führung von Versorgungsleitungen (100) z. B. Schläuche, Kabel u. a. aufweist, wobei der Schlitten quer zur Längsachse des Fahrzeugs im Mittelrahmen (1) beweglich gelagert ist.

2. Mittelrahmen nach Anspruch 1,
**dadurch gekennzeichnet**,
daß die vertikal verlaufenden Streben (5, 6) des Mittelrahmens (1) durch eine Führungsschiene (2, 250) für den Schlitten (30, 40; 150, 160) verbunden sind.

3. Mittelrahmen nach Anspruch 1,
**dadurch gekennzeichnet**,
daß der Schlitten (30, 40; 150, 160) in der Führungsschiene (2, 250) parallel zur Längsachse der Führungsschiene (2, 250) zwangsgeführt ist.

4. Mittelrahmen nach Anspruch 3,
**dadurch gekennzeichnet**,
daß der Schlitten (30, 40, 150, 160) außerhalb der Mittellängsachse (120) des Fahrzeugs in der Führungsschiene (2, 250) geführt ist.

5. Mittelrahmen nach Anspruch 1,
**dadurch gekennzeichnet**,
daß der Schlitten (30, 40; 150, 160) durch mindestens ein Führungsglied (50, 60, 70, 80; 200, 210, 220, 230) an mindestens einem Fahrzeugteil (10, 20) anlenkbar ist.

6. Mittelrahmen nach Anspruch 1,
**dadurch gekennzeichnet**,
daß das Führungsglied (50, 60, 70, 80; 200, 210, 220, 230) eine Stange ist, die sowohl am Fahrzeugteil als auch am Schlitten (30, 40; 150, 160) gelenkig angeordnet ist.

7. Mittelrahmen nach einem der voranstehenden Ansprüche,
**dadurch gekennzeichnet**,
daß die Führungsschiene (2, 250) zwei Schlitten (30, 40, 150, 160) aufweist, die außerhalb der Mittellängsachse des Fahrzeugs in der Führungsschiene (2, 250) angeordnet sind.

8. Mittelrahmen nach Anspruch 7,
**dadurch gekennzeichnet**,
daß jeder Schlitten (30, 40; 150, 160) durch jeweils ein Führungsglied (50, 70, 60, 80; 200, 210, 220, 230) mit jeweils einem Fahrzeugteil verbindbar ist.

9. Mittelrahmen nach einem der voranstehenden Ansprüche,
**dadurch gekennzeichnet**,
daß die Anlenkung des bzw. der Führungsglieder (50 bis 80; 200 bis 230) am Fahrzeugteil in der Mittellängsachse (120) des Fahrzeugs erfolgt.

10. Mittelrahmen nach einem der voranstehenden Ansprüche,
**dadurch gekennzeichnet,**
daß die Führungsschiene (2; 250) den Schlitten (30, 40; 150, 160) formschlüssig aber längs der Führungsschiene (2; 250) verschieblich aufnimmt.

11. Mittelrahmen nach einem der voranstehenden Ansprüche,
**dadurch gekennzeichnet**,
daß das Führungsglied (200, 210, 220, 230) ein Gelenk (201, 211, 221, 231) aufweist.

12. Mittelrahmen nach einem der voranstehenden Ansprüche,
**dadurch gekennzeichnet,**
daß das Gelenk (201, 211, 221, 231) nach innen, d. h. in Richtung auf die Führungsschiene abknickbar ist.

13. Mittelrahmen nach einem der voranstehenden Ansprüche,
**dadurch gekennzeichnet**,
daß das Gelenk (201, 211, 221, 231) einen Anschlag (202, 212, 222, 232) aufweist, um ein Abknicken nach außen um einen Winkel größer als 180° zu verhindern.

14. Mittelrahmen nach einem der voranstehenden Ansprüche,
**dadurch gekennzeichnet**,
daß im Bereich des Gelenkes (201, 211, 221, 231) ein Rückholglied (203, 213, 223, 233) angeordnet ist, das am Mittelrahmen (1) drehbar befestigbar ist.

15. Mittelrahmen nach Anspruch 14,
**dadurch gekennzeichnet**,
daß das Rückholglied (203, 213, 223, 233) an der Führungsschiene schwenkbar (250) angeordnet ist.

16. Mittelrahmen nach Anspruch 14,
**dadurch gekennzeichnet**,
daß das Rückholglied (203, 213, 223, 233) in der Mittellängsachse (120) an der Führungsschiene (250) angeordnet ist.

17. Mittelrahmen nach einem der voranstehenden Ansprüche,
**dadurch gekennzeichnet**,
daß das Rückholglied (203, 213, 223, 233) in seiner Länge einstellbar ist.

18. Mittelrahmen nach einem der voranstehenden Ansprüche,
**dadurch gekennzeichnet**,
daß der Schlitten (150, 160) einen Träger (158, 168) aufweist, der verdrehbar von dem Schlitten aufnehmbar ist.

19. Mittelrahmen nach Anspruch 18,
**dadurch gekennzeichnet**,
daß der Träger (158, 168) um eine vertikale Achse verdrehbar ist.

20. Mittelrahmen (1) eines in zwei Hälften unterteilten Balges eines Übergangs zwischen zwei gelenkig miteinander verbundenen Fahrzeugteilen, wobei die Balghälften endseitig an einem Fahrzeugteil (10, 20) angelenkt sind,
**dadurch gekennzeichnet**,
daß der Mittelrahmen (1) einen horizontal verlaufenden Bügel (8) aufweist, der einen Schwenkarm (300) drehbar aufnimmt, wobei der Schwenkarm (300) endseitig Halterungen (310, 320) aufweist.

21. Mittelrahmen nach Anspruch 20,
**dadurch gekennzeichnet**,
daß die Halterungen (310, 320) drehbar durch den Schwenkarm (300) aufnehmbar sind.

22. Mittelrahmen nach Anspruch 20,
**dadurch gekennzeichnet**,
daß der Schwenkarm (300) in der Mittellängsachse (120) des Fahrzeugs am Mittelrahmen (1) anbringbar ist.

23. Mittelrahmen nach Anspruch 20,
**dadurch gekennzeichnet**,
daß der Schwenkarm (300) mittig am Bügel (8) drehbar anbringbar ist.

24. Mittelrahmen nach Anspruch 20,
**dadurch gekennzeichnet**,
daß die Halterungen (310, 320) Öffnungen (30, 360) für die Versorgungsleitungen (100) aufweisen.

## Claims

1. Central frame of a connecting corridor bellows subdivided in two halves, the corridor being positioned between two vehicle parts hinged to each other, whereas the bellows halves are linked by their end part to a vehicle part,
**characterized in that** the central frame (1) located in the ceiling area of the connecting corridor is provided with a cradle (30, 40; 150, 160; 300, 310, 320) for guiding supply lines (100), as conduits, cables and the like, this cradle being movably arranged in the central frame (1) transversely to the longitudinal axis of the vehicle.

2. Central frame according to claim 1,
**characterized in that** the vertically running braces (5, 6) of the central frame (1) are interconnected by a guiding rail (2, 250) for the cradle (30, 40; 150, 160).

3. Central frame according to claim 1,
**characterized in that** the cradle (30, 40; 150, 160) is restrictedly guided in the guiding rail (2, 250) parallel to the longitudinal axis of the guiding rail (2, 250).

4. Central frame according to claim 3,
**characterized in that** the cradle (30, 40, 150, 160) is guided in the guiding rail (2, 250) eccentrically to the central longitudinal axis (120) of the vehicle.

5. Central frame according to claim 1,
**characterized in that** the cradle (30, 40; 150, 160) is hingeable to at least one vehicle part (10, 20) by means of at least one guiding member (50, 60, 70, 80; 200, 210, 220, 230).

6. Central frame according to claim 1,
**characterized in that** the guiding member (50, 60, 70, 80; 200, 210, 220, 230) is advantageously designed as a rod, hinged to the vehicle part as well as to the cradle (30, 40; 150, 160).

7. Central frame according to one of the previous claims,
**characterized in that** the guiding rail (2, 250) is provided with two cradles (30, 40, 150, 160) being arranged out of the central axis of the vehicle in the guiding rail (2, 250).

8. Central frame according to claim 7,
**characterized in that** each cradle (30, 40; 150, 160) is linkable to one vehicle part each by means of one guiding member (50, 60, 70, 80; 200, 210, 220, 230) per cradle.

9. Central frame according to one of the previous claims,
**characterized in that** the linking of the guiding member or members (50 to 80; 200 to 230) to the vehicle part takes place in the central longitudinal axis (120) of the vehicle.

10. Central frame according to one of the previous claims,
**characterized in that** the guiding rail (2; 250) receives the cradle (30, 40; 150, 160) form-fittingly but movably along the guiding rail (2; 250).

11. Central frame according to one of the previous claims,
**characterized in that** the guiding member (200, 210, 220, 230) is provided with a joint (201, 211, 221, 231).

12. Central frame according to one of the previous claims,
**characterized in that** the joint (201, 211, 221, 231) can be buckled inwards, i.e. towards the guiding rail.

13. Central frame according to one of the previous claims,
**characterized in that**, in order to avoid outward buckling by an overstretched angle of more than 180°, the joint (201, 211, 221, 231) is provided with a corresponding stopper (202, 212, 222, 232).

14. Central frame according to one of the previous claims,
**characterized in that** a recuperating member (203, 213, 223, 233) is arranged in the area of the joint (201, 211, 221, 231) which is pivotably fastenable on the central frame (1).

15. Central frame according to claim 14,
**characterized in that** the recuperating member (203, 213, 223, 233) is slewably arranged on the guiding rail (250).

16. Central frame according to claim 14,
**characterized in that** the recuperating member (203, 213, 223, 233) is arranged on the guiding rail (250) in its central longitudinal axis.

17. Central frame according to one of the previous claims,
**characterized in that** the length of the recuperating member (203, 213, 223, 233) is adjustable.

18. Central frame according to one of the previous claims,
**characterized in that** the cradle (150, 160) is provided with a carrier (158, 168) which is pivotably receivable by the cradle.

19. Central frame according to claim 18,
**characterized in that** the carrier (158, 168) is pivotable on a vertical axis.

20. Central frame (1) of a connecting corridor bellows subdivided in two halves, the corridor being positioned between two vehicle parts hinged to each other, whereas the bellows halves are linked by their end part to a vehicle part (10, 20),
**characterized in that** the central frame (1) is provided with a horizontally running bow (8) that pivotably receives a swivel arm (300), whereas the swivel arm (300) has holding devices (310, 320) at its end.

21. Central frame according to claim 20,
**characterized in that** the holding devices (310, 320) are pivotably receivable by the swivel arm (300).

22. Central frame according to claim 20,
**characterized in that** the swivel arm (300) is arrangeable on the central frame (1) in the central longitudinal axis (120) of the vehicle.

23. Central frame according to claim 20,
**characterized in that** the swivel arm (300) is pivotably arrangeable in the centre of the bow (8).

24. Central frame according to claim 20,
**characterized in that** the holding devices (310, 320) are provided with openings (30, 360) for the supply lines (100).

## Revendications

1. Cadre central d'un soufflet d'un couloir de communication divisé en deux parties entre deux parties de véhicule articulées ensemble, les deux moitiés de soufflet pouvant être articulées par leur extrémité à une partie de véhicule,
**caractérisé en ce que** le cadre central (1) situé dans le plafond du couloir de communication est pourvu d'un chariot (30, 40; 150, 160; 300, 310, 320) pour poser des conduites de distribution (100), par exemple des tuyaux, des câbles et autres, ledit chariot étant placé de façon mobile transversalement à l'axe longitudinal du véhicule dans le cadre central (1).

2. Cadre central selon la revendication 1,
**caractérisé en ce que** les traverses (5, 6) verticales du cadre central (1) sont reliées par un rail de guidage (2, 250) pour le chariot (30, 40; 150, 160).

3. Cadre central selon la revendication 1,
**caractérisé en ce que** le chariot (30, 40; 150, 160) est guidé de force dans le rail de guidage (2, 250) parallèlement à l'axe longitudinal du rail de guidage (2, 250).

4. Cadre central selon la revendication 3,
**caractérisé en ce que** le chariot (30, 40; 150, 160) est guidé dans le rail de guidage (2, 250) en dehors de l'axe longitudinal central (120) du véhicule.

5. Cadre central selon la revendication 1,
**caractérisé en ce que** le chariot (30, 40; 150, 160) peut être articulé à au moins une partie de véhicule (10, 20) par au moins un membre de guidage (50, 60, 70, 80; 200, 210, 220, 230).

6. Cadre central selon la revendication 1,
**caractérisé en ce que** le membre de guidage (50, 60, 70, 80; 200, 210, 220, 230) est conçu comme une barre articulée aussi bien à la partie de véhicule qu'au chariot (30, 40; 150, 160).

7. Cadre central selon l'une des revendications précédentes,
**caractérisé en ce que** le rail de guidage (2, 250) est pourvu de deux chariots (30, 40; 150,1 60) placés en dehors de l'axe longitudinal central du véhicule dans le rail de guidage (2, 250).

8. Cadre central selon la revendication 7,
**caractérisé en ce que** chaque chariot (30, 40; 150, 160) peut être relié par un membre de guidage (50, 60, 70, 80; 200, 210, 220, 230) à une partie de véhicule.

9. Cadre central selon l'une des revendications précédentes,
**caractérisé en ce que** l'articulation du voire des membres de guidage (50 à 80; 200 à 230) au véhicule se fait dans l'axe longitudinal central (120) du véhicule.

10. Cadre central selon l'une des revendications précédentes,
**caractérisé en ce que** le rail de guidage (2; 250) reçoit le chariot (30, 40; 150, 160) de façon à ce qu'il épouse sa forme mais qu'il soit mobile le long du rail de guidage (2; 250).

11. Cadre central selon l'une des revendications précédentes,
**caractérisé en ce que** le membre de guidage (200, 210, 220, 230) est pourvu d'une articulation (201, 211, 221, 231).

12. Cadre central selon l'une des revendications précédentes,
**caractérisé en ce que** l'articulation (201, 211, 221, 231) peut être déplacée angulairement vers l'intérieur, c.à.d. en direction du rail de guidage.

13. Cadre central selon l'une des revendications précédentes,
**caractérisé en ce que** l'articulation (201, 211, 221, 231) a été pourvue d'une butée (202, 212, 222, 232) afin d'éviter un déplacement angulaire vers l'extérieur selon un angle supérieur à 180°.

14. Cadre central selon l'une des revendications précédentes,
**caractérisé en ce que** un membre récupérateur (203, 213, 223, 233) est placé dans la région de l'articulation (201, 211, 221, 231) de façon à être pivotablement attachable au cadre central (1).

15. Cadre central selon la revendication 14,
**caractérisé en ce que** le membre récupérateur (203, 213, 223, 233) est placé de façon pivotable sur le rail de guidage (250).

16. Cadre central selon la revendication 14,
**caractérisé en ce que** le membre récupérateur (203, 213, 223, 233) est placé sur le rail de guidage (250) dans l'axe longitudinal central (120).

17. Cadre central selon l'une des revendications précédentes,
**caractérisé en ce que** la longueur du membre récupérateur (203, 213, 223, 233) est ajustable.

18. Cadre central selon l'une des revendications précédentes,
**caractérisé en ce que** le chariot (150, 160) est pourvu d'un support (158, 168) reçu de façon pivotable par le chariot.

19. Cadre central selon la revendication 18,
**caractérisé en ce que** le support (158, 168) est pivotable autour d'un axe vertical.

20. Cadre central (1) d'un soufflet d'un couloir de communication divisé en deux parties entre deux parties de véhicule articulées ensemble, les deux moitiés de soufflet pouvant être fixées par leur extrémité à une partie de véhicule (10, 20),
**caractérisé en ce que** le cadre central (1) est pourvu d'une bride horizontale (8) recevant de façon pivotable un bras pivotant (300), ledit bras pivotant (300) étant pourvu à ses extrémités de fixations (310, 320).

21. Cadre central selon la revendication 20,
**caractérisé en ce que** les fixations (310, 320) peuvent être reçues pivotablement par le bras pivotant (300).

22. Cadre central selon la revendication 20,
**caractérisé en ce que** le bras pivotant (300) peut être placé sur le cadre central (1) dans l'axe longitudinal central (120) du véhicule.

23. Cadre central selon la revendication 20,
**caractérisé en ce que** le bras pivotant (300) peut être placé au centre de la bride (8) de façon pivotable.

24. Cadre central selon la revendication 20,
**caractérisé en ce que** les fixations (310, 320) sont pourvues d'ouvertures (30, 360) pour les conduites de distribution (100).
